**Europäisches Patentamt**

**European Patent Office**

**Office européen des brevets**

(19)

(11) Numéro de publication: **0 098 275**
**B1**

(12) # FASCICULE DE BREVET EUROPEEN

(45) Date de publication du fascicule du brevet:
13.11.85

(51) Int. Cl.⁴: **A 46 B 7/06,** A 46 B 7/04

(21) Numéro de dépôt: **83900181.5**

(22) Date de dépôt: **30.12.82**

(86) Numéro de dépôt international:
**PCT/CH 82/00142**

(87) Numéro de publication internationale:
**WO 83/02218 (07.07.83** Gazette 83/16)

(54) **BROSSE A DENTS.**

(30) Priorité: **30.12.81 CH 8345/81**

(43) Date de publication de la demande:
**18.01.84 Bulletin 84/3**

(45) Mention de la délivrance du brevet:
**13.11.85 Bulletin 85/46**

(84) Etats contractants désignés:
**AT BE CH DE FR GB LI LU NL SE**

(56) Documents cités:
**DE - B - 1 112 966**
**FR - A - 384 303**
**FR - A - 1 166 163**
**FR - A - 1 315 706**
**FR - A - 2 400 338**
**FR - A - 2 430 741**
**US - A - 1 414 886**
**US - A - 1 557 244**
**US - A - 2 059 035**
**US - A - 2 172 624**
**US - A - 4 240 452**

(73) Titulaire: **NAHUM, Sylvain, 16 Avenue Dumas,**
**CH 1206 Genève (CH)**

(72) Inventeur: **NAHUM, Sylvain, 16 Avenue Dumas,**
**CH 1206 Genève (CH)**

(74) Mandataire: **Charbonnier, Georges R., 8, Avenue**
**Peschier, CH-1206 Genève (CH)**

BUNDESDRUCKEREI BERLIN

**Description**

La présente invention a pour objet une brosse à dents constituée par un manche et par une tête dans laquelle les touffes de poils sont montées sur des supports mobiles mis automatiquement en mouvement lorsque l'utilisateur, après avoir appliqué les poils contre ses dents, imprime à la brosse, tenue par le manche, un mouvement rectiligne de va-et-vient dans le sens vertical ou horizontal. Dans les brosses à dents connues de cette espèce, les supports mobiles exécutent tous le même mouvement, par exemple un mouvement rotatif ou un mouvement oscillant, de sorte que les poils ne balayent pas correctement la surface des dents et ne permettent pas d'obtenir un bon nettoyage.

La brosse à dents selon la présente invention vise à améliorer la qualité et l'efficacité du brossage.

Cette brosse à dents est caractérisée par le fait qu'elle comprend au moins un support mobile d'un premier type agencé de manière que la ou les touffes de poils qu'il porte soient susceptibles d'osciller dans des plans perpendiculaires au plan de la brosse, des supports mobiles d'un second type agencés de manière que les touffes de poils qu'ils portent soient susceptibles de tourner autor de leurs axes de symétrie respectifs, et un mécanisme reliant cinématiquement lesdits supports mobiles entre eux de façon que lors du brossage les touffes de poils oscillantes basculent alternativement dans un sens et dans l'autre en entrainant en rotation alternative les touffes de poils rotatives.

Le dessin ci-annexé représente, schématiquement et à titre d'exemple, deux formes d'exécution de l'objet de l'invention.

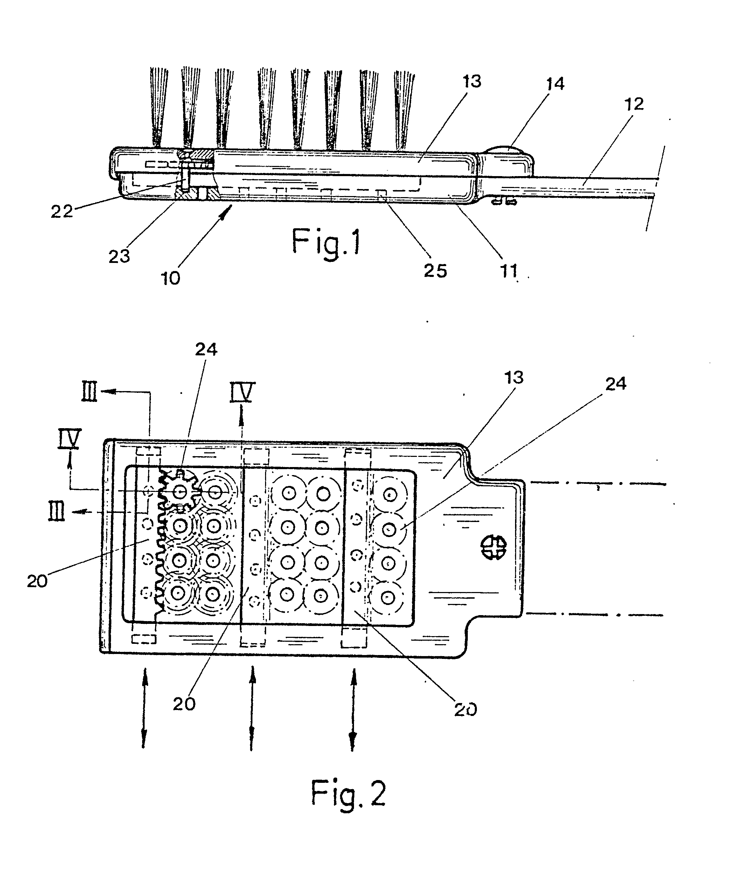

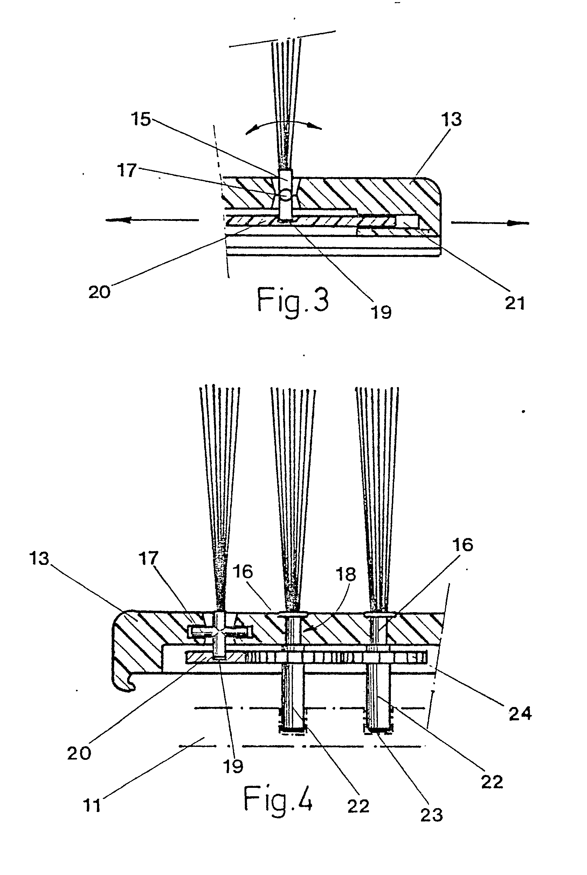

La figure 1 est une vue en élévation, partiellement déchirée , de la première forme d'exécution. La figure 2 en est une vue partielle par dessus. Les figures 3 et 4 sont des vues en coupe par les lignes III-III et IV-IV de la figure 2.

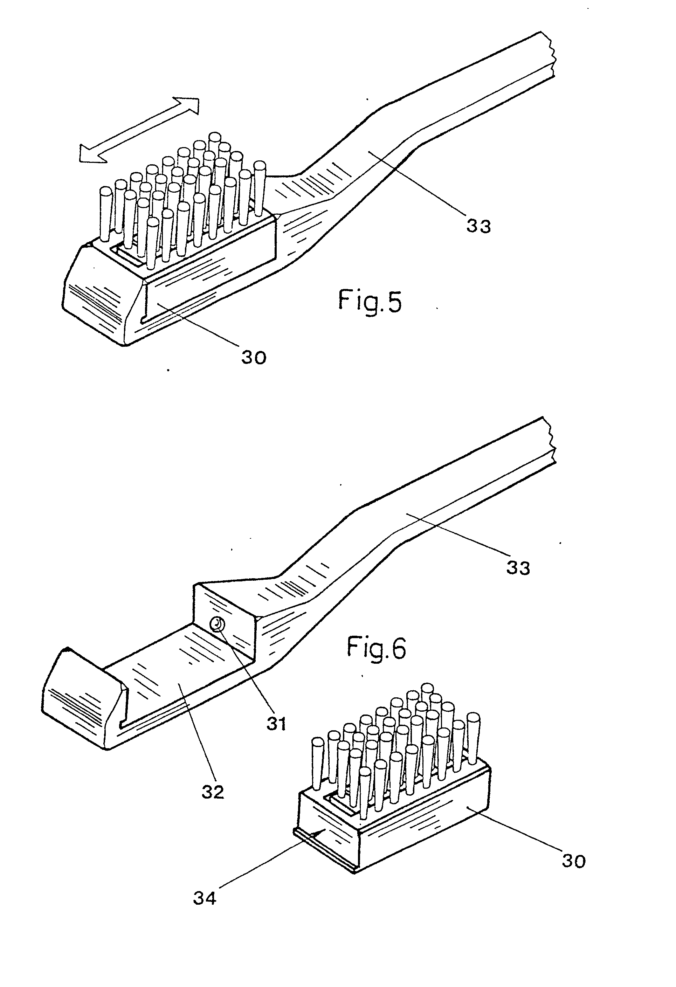

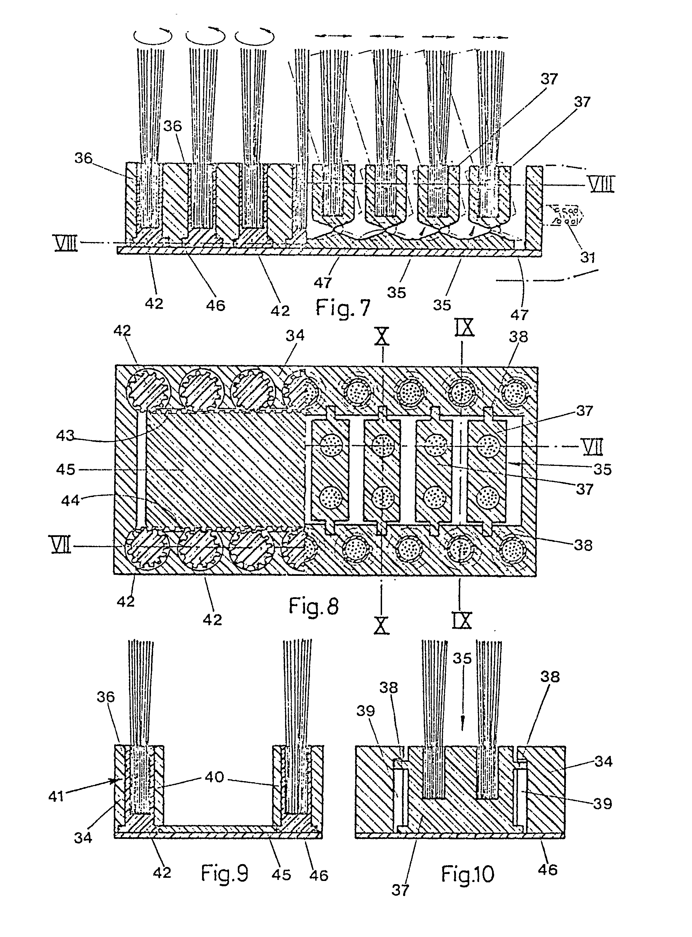

La figure 5 est une vue en perspective de la seconde forme d'exécution; la figure 6 est une vue analogue à la figure 5 illustrant le démontage de la brosse; les figures 7 et 8 sont des sections de la tête de la brosse par les plans VII-VII et VIII-VIII des figures 8 et 7 respectivement; les figures 9 et 10 sont des sections par les plans IX-IX et X-X de la figure 8.

La brosse à dents représentée aux figures 1 à 4 est constituée par un boitier 10 formé d'un corps 11 se prolongeant par un manche 12 et par un couvercle 13 clipsé sur le corps 11 par un dispositif à pression 14. Les touffes de poils sont portées par des supports mobiles de deux types montés dans le couvercle 13: des supports basculants 15 et des supports rotatifs 16 ordonnés respectivement en trois et cinq rangées transversales.

Les supports 15 pivotent sur des axes 17. Les extrémités inférieures des axes 17 de chaque rangée de supports 15 sont engagées dans des ouvertures 19 d'une crémaillère 20 coulissant dans un guide 21.

Les supports 16 tournent dans des paliers 18. Ils se terminent vers le bas par un pivot 22, sur lequel est calé un pignon 24, engagé dans un logement 23 ménagé dans la surface intérieure du corps 11.

Les pignons 24 de la première rangée de support 16 sont en prise simultanément avec la crémaillère 20 de la première rangée de supports 15 et avec les pignons 24 de la seconde rangée de supports 16. Les pignons 24 de la troisième rangée de supports 16 sont simultanément en prise avec la crémaillère 20 de la seconde rangée de supports 15 et avec les pignons 24 de la quatrième rangée de supports 16. Enfin la crémaillère 20 de la troisième rangée de supports 15 est en prise avec les pignons 24 de la cinquième rangée de supports 16.

Lorsque l'utilisateur applique les poils sur ses dents et imprime à la brosse un mouvement de va-et-vient vertical, les touffes de poils montées sur les supports basculants 15 oscillent en communiquant aux crémaillères 20 un mouvement correspondant au cours duquel les supports rotatifs 16 sont sont entrainés en rotation alternative.

Pendant ces divers mouvements, les poils montés sur les supports basculants 15 balayent linéairement la surface des dents, tandis que les poils montés sur les supports rotatifs 16 pénètrent dans les interstices dentaires.

La conjugaison de ces divers mouvements a pour résultat un nettoyage particulièrement efficace des dents.

Pour laver la brosse après usage, il suffit de déclipser le couvercle 13 et le passer sous l'eau ainsi que le corps 11. On notera que des trous 25 facilitent l'évacuation de la pâte dentifrice et des déchets qui se seraient infiltrés dans le fond du boitier.

La brosse décrite ci-dessus sera avantageusement réalisée en matière plastique moulée ou injectée y compris les crémaillères 20 et les pigons 24.

La brosse à dents représentée aux figures 5 à 10 est constituée par une cassette 30 fixée amoviblement, au moyen d'un verrou à bille 31, dans un logement ad-hoc 32 d'un manche 33.

Cette cassette 30, entièrement réalisée an matière plastique, est formée d'un boitier 34 comportant quatre rangées longitudinales de touffes de touffes de poils montées sur des supports mobiles de deux taypes, des supports basculants 35 et des supports rotatifs 36.

Les supports basculants 35 portent chacun deux touffes des poils et forment les deux rangées centrales. Ils sont constitués par des blocs 37 dotés latéralement de tourillons 38 engagés dans des rainures verticales 39 ménagées dans les faces intérieures des parois longitudinales du boitier 34. Les touffes de poils montées sur ces supports 35 peuvent ainsi basculer comme illustré au dessin dans des plans perpendiculaires au plan de la brosse.

Les supports rotatifs 36 sont constitués par des douilles 40, portant chacun une touffe de poils, engagées rotativement dans des trous cylindriques correspondant 41 ménagés dans la hauteur des parois longitudinale du boitier 34. Les touffes de poils montées sur ces supports 36 peuvent ainsi tourner comme illustré au dessin autour de leurs axes de symétrie respectifs.

Les douilles 40 se terminent, vers le bas, par des pignons 42 qui engrènent avec les dentures 43 et 44 d'une crêmaillère 45 prenant appui, ainsi que les pignons 42 sur une semelle 46 constituant le fond du boitier 34.

Les sept blocs 37 sont moulés d'une pièce avec la crémaillère 43 et présentent chacun, dans leur zone inférieure, un amincissement 47 qui joue le rôle d'une articulation.

Lorsque l'utilisateur applique les poils sur ses dents et imprime à la brosse, tenue par le manche, un mouvement de va-et-vient horizontal, les touffes de poils montées sur les supports basculants 35 oscillent en communiqant à la crémaillère 43 un mouvement correspondant au cours duquel les supports rotatifs 36 sont entrainés en rotation alternative.

Comme dans la première forme d'exécution décrite, les actions conjuguées des poils basculants et des poils rotatifs assurent un brossage particulièrement efficace des dents.

Une caractéristique importante de cette seconde forme d'exécution réside dans le fait que la tête de la brosse est constituée par une cassette qui peut être remplacée par une cassette neuve lorsque les poils sont usés, ou par une cassette dont les poils présentent des particularités différentes, par exemple des poils plus durs ou des poils différents pour les touffes basculantes et les touffes rotatives. Réalisée en grande séries, cette brosse pourra atteindre un prix tel qu'il sera possible de vendre des cassettes destinées à être jetées après avoir été utilisées un certain nombre de fois.

Dans ces conditions, on pourra envisager de réaliser des brosses à dents à cassettes jetables avec un manche particulièrement bien étudié du point de vue de la présentation, par exemple en métal précieux, gravé, ciselé ou guilloché, voir personnalisés par des initiales, des entrelacs ou d'autres signes.

Dans une variante il pourrait n'y avoir qu'un seul support basculant portant une ou plusieurs touffes de poils.

## Revendications

1. Brosse à dents constituée par un manche et par une tête dans laquelle des touffes de poils sont montées sur des supports mobiles mis automatiquement en mouvement lorsque l'utilisateur, après avoir appliqué les poils contre ses dents, imprime à la brosse, tenue par le manche, un mouvement rectiligne de va-et-vient dans le sens vertical ou horizontal, caractérisée par le fait qu'elle comprend au moins un support mobile d'un premier type (15, 35) agencé de manière que la ou les touffes de poils qu'il porte soient susceptibles d'osciller dans des plans perpendiculaires au plan de la brosse, des supports mobiles d'un second type (16, 36) agencés de manière que les touffes de poils qu'ils portent soient susceptibles de tourner autour de leurs axes de symétrie respectifs, et un mécanisme (17—20, 42—45) reliant cinématiquement lesdits supports mobiles (15—16, 35—36) entre eux de façon que, lors du brossage, les touffes de poils oscillantes basculent alternativement dans un sens et dans l'autre en entrainant en rotation alternative les touffes de poils rotatives.

2. Brosse à dents selon la revendication 1, caractérisée par le fait que ledit mécanisme (17—20) est logé dans un boitier en deux parties (11, 13).

3. Brosse à dents selon la revendication 2, caractérisée par le fait que ledit mécanisme (17—20) est monté dans la partie supérieure du boitier.

4. Brosse à dents selon la revendication 2, caractérisée par le fait que les deux parties (11, 13) du boitier sont assemblées amoviblement par un dispositif à pression (14).

5. Brosse à dents selon la revendication 2, caractérisée par le fait que ledit boitier présente des trous (25) pour l'évacuation de l'eau.

6. Brosse à dents selon la revendication 1, caractérisée par le fait que les plans d'oscillation des touffes de poils portés par les supports du premier type (15) sont transversaux par rapport à l'axe longitidinal du manche (12).

7. Brosse à dents selon la revendication 1, caractérisée par le fait que les plans d'oscillation des touffes de poils portés par les supports du premier type (35) sont parallèles à l'axe longitudinal du manche (33).

8. Brosse à dents selon la revendication 1, caractérisée par le fait que sa tête est montée amoviblement sur le manche (33).

9. Brosse à dents selon la revendication 8, caractérisée par le fait que lesdits supports (35, 36) et ledit mécanisme (42—45) sont logés dans une cassette constituant la tête amovible (33).

10. Brosse à dents selon la revendication 1, caractérisée par le fait que ledit mécanisme (17—20, 42—45) comporte au moins une crémaillère (20, 45) et des pignons (24, 42).

## Patentansprüche

1. Zahnbürste, bestehend aus einem Stiel und einem Kopf, in welchem Borstenbüschel auf beweglichen Trägern angebracht sind, welche automatisch in Bewegung gesetzt werden, sobald der Benutzer nach dem Anlegen der Borsten an sein Gebiß mit der am Stiel gehaltenen Zahnbürste geradlinige, senkrechte oder waagrechte Hin- und Herbewegungen ausführt, dadurch gekennzeichnet, daß sie mindestens einen beweglichen Träger eines ersten Typs (15, 35) aufweist, der so eingerichtet ist, daß das oder die Borstenbüschel, die er trägt, sich auf Ebenen senkrecht zur Ebene der Bürste hin- und herbewegen können, daß sie bewegliche Träger eines zweiten Typs (16, 36) aufweist, die so eingerichtet sind, daß die Borstenbüschel, die sie tragen, sich um ihre jeweiligen Symmetrieachsen drehen können, und daß sie einen Mechanismus (17—20, 42—45) aufweist, der die genannten beweglichen Träger (15—16, 35—36) untereinander kinetisch so verbindet, daß die vibrierenden Borstenbüschel beim Zähneputzen abwechselnd auf die eine und andere Seite kippen und so die Büschel der rotierenden Borsten in eine Rotation mit abwechselnder Drehrichtung versetzen.

2. Zahnbürste nach Anspruch 1, dadurch gekennzeichnet, daß der genannte Mechanismus (17—20) in einem zweiteiligen Gehäuse (11, 13) gelagert ist.

3. Zahnbürste nach Anspruch 2, dadurch gekennzeichnet, daß der genannte Mechanismus (17—20) im oberen Teil des Gehäuses gelagert ist.

4. Zahnbürste nach Anspruch 2, dadurch gekennzeichnet, daß die beiden Teile (11, 13) des Gehäuses durch eine Druckvorrichtung (14) abnehmbar zusammengesetzt sind.

5. Zahnbürste nach Anspruch 2, dadurch gekennzeichnet, daß das genannte Gehäuse Löcher (25) für den Abfluß des Wassers aufweist.

6. Zahnbürste nach Anspruch 1, dadurch gekennzeichnet, daß die Ebenen der Hin- und Herbewegung der Borstenbüschel auf den Träger des ersten Typs (15) transversal zur Längsachse des Stiels (12) liegen.

7. Zahnbürste nach Anspruch 1, dadurch gekennzeichnet, daß die Ebenen der Hin- und Herbewegung der Borstenbüschel auf den Träger des ersten Typs (35) parallel zur Längsachse des Stiels (33) liegen.

8. Zahnbürste nach Anspruch 1, dadurch gekennzeichnet, daß der Bürstenkopf (34) abnehmbar auf dem Stiel (33) angebracht ist.

9. Zahnbürste nach Anspruch 8, dadurch gekennzeichnet, daß die genannten Träger (35, 36) und der genannte Mechanismus (42—45) in einer Kassette gelagert sind, die der abnehmbare Bürstenkopf (33) ist.

10. Zahnbürste nach Anspruch 1, dadurch gekennzeichnet, daß der genannte Mechanismus (17—20, 42—45) mindestens eine Zahnstange (20, 45) und Zahnräder (24, 42) aufweist.

## Claims

1. A tooth brush constitued by a handle and a head in which bristle tufts are mounted on moving supports automatically set in motion when a user, after applying the bristles against his teeth, applies to said brush, held by the handle, a reciprocating rectilinear movement in vertical or horizontal direction, characterized by the fact that said tooth brush comprises at least one moving support of a first type (15, 35) such that the bristle tuft or tufts which are carried by said support are able to oscillate in planes perpendicular to the plane of the brush, moving supports of a second type (16, 36) such that the bristle tufts carried by said supports are able to rotate about their respective symmetry axis, and a mechanism (17—20, 42—45) kinematically interconnecting said moving supports of both types (15, 35 — 16, 36) so that, during brushing, said oscillating bristle tufts swing alternatively in one direction and in the other while driving in alternatively rotation said rotative bristle tufts.

2. A tooth brush as claimed in claim 1, characterized by the fact that said mechanism (17—20) is located in a two-part housing (11, 13).

3. A tooth brush as claimed in claim 2, characterized by the fact that said mechanism (17—20) is mounted in the highe part of said housing.

4. A tooth brush as claimed in claim 2, characterized by the fact that the two housing parts (11, 13) are removably assembled by a pressure device (14).

5. A tooth brush as claimed in claim 2, characterized by the fact that said housing includes drainage holes (25).

6. A tooth brush as claimed in claim 1, characterized by the fact that oscillation planes of bristle tufts carried by supports of the first type (15) lie transversely to the longitudinal axis of said handle (12).

7. A tooth brush as claimed in claim 1, characterized by the fact that oscillation planes of bristle tufts carried by supports of the first type (35) lie parallelly to the longitudinal axis of said handle (33).

8. A tooth brush as claimed in claim 1, characterized by the fact that said head (34) is removably mounted of the handle (33).

9. A tooth brush as claimed in claim 8, characterized by the fact that said supports (35, 36) ans said mechanism (42, 45) are housed in a cassette constituting the removably head (34).

10. A tooth brush as claimed in claim 1, characterized by the fact that said mechanism (17—20, 42—45) comprises at least one rack (20, 45) and pinions (24, 42).

Fig.1

Fig. 2

Fig.3

Fig.4

7

Fig.5

Fig.6

Fig. 7

Fig. 8

Fig. 9

Fig. 10